# EUROPEAN PATENT APPLICATION

(11) **EP 4 749 710 A1**
(43) Date of publication of application: **27.05.2026**
(21) Application number: 23945692.4
(22) Date of filing: 07.12.2023
(51) Int. Cl.: H01M 4/36, H01M 4/38, H01M 4/587, H01M 4/62

(54) **SILICON-CARBON COMPOSITE MATERIAL CONTAINING CARBON NANOTUBES, AND PREPARATION METHOD THEREFOR AND USE THEREOF**

(30) Priority: 18.07.2023 CN 202310884957
(71) Applicant: Tianmulake Excellent Anode Materials Co, Ltd., Liyang, Jiangsu 213330 (CN)
(72) Inventor: JI, Xiang, Liyang, Jiangsu 213300 (CN); ZHANG, Jianhua, Liyang, Jiangsu 213300 (CN); LIU, Bonan, Liyang, Jiangsu 213300 (CN); LUO, Fei, Liyang, Jiangsu 213300 (CN)
(74) Representative: Glück Kritzenberger Patentanwälte PartGmbB
(86) International application number: PCT/CN2023/136930
(87) International publication number: WO 2025/015813

(57) **Abstract**

Disclosed are a silicon-carbon composite material containing carbon nanotubes, and a preparation method therefor and the use thereof. The silicon-based composite material comprises a porous composite hard carbon material containing carbon nanotubes, and silicon particles; the interior of the porous composite hard carbon material is supported by the carbon nanotubes, the silicon-carbon composite material uses the porous composite hard carbon material as a substrate, and silicon nanoparticles are distributed in the pores of the porous composite hard carbon material; the particle size of the silicon-carbon composite material is 1-100 µm; and the pore size of the pores of the porous composite hard carbon material is 1-7 nm. By means of the composite material, the size and uniform dispersion of the silicon nanoparticles is limited, an expansion effect is reduced, and the problem of repeated generation of an SEI film caused by silicon grain pulverization is avoided. The damage to the material from silicon expansion is also reduced, thereby further improving the cycling performance of a battery. The carbon nanotubes can strengthen the compression and tensile resistance of the substance, keep the structure of the material stable, provide a fast channel for lithium-ion transmission, and ensure the rate performance of the material.

## Description

The present application claims priority to Chinese Patent Application No. 202310884957.6 filed with the China National Intellectual Property Administration (CNIPA) on July 18, 2023 and entitled "Silicon-Carbon Composite Material Containing Carbon Nanotubes, and Preparation Method Therefor and Use Thereof".

### BACKGROUND OF THE INVENTION

### 1. Technical Field

The present invention relates to the technical field of hard carbon negative electrode materials, and in particular to, a silicon-carbon composite material containing carbon nanotubes, and a preparation method therefor and a use thereof.

### 2. Description of Related Art

A negative electrode material widely used in a lithium-ion battery is composed of a carbon material, mainly including artificial graphite and natural graphite, which has a theoretical capacity of 372 mAh/g and thus cannot meet the demand for a high-capacity battery. Silicon, as the negative electrode material for the lithium-ion battery, has an extremely high theoretical reversible capacity, reaching up to 4,200 mAh/g. A main problem of silicon is its great volume expansion coefficient. In the lithium-ion battery, the charge-discharge process involves the migration of lithium ions between the positive electrode and the negative electrode of the battery. When the lithium ions are intercalated into the silicon negative electrode, silicon crystals undergo a significant volume change.

During the initial charge-discharge process of the lithium-ion battery, the silicon negative electrode undergoes intercalation and deintercalation of the lithium ions, resulting in the expansion and contraction of the silicon crystals. The volume change leads to stress concentration in the silicon crystals and the formation of microcracks. With the cycling of charge and discharge, these cracks gradually propagate and eventually lead to the pulverization of the silicon crystals. The silicon particles generated by pulverization will react with components in an electrolyte solution to form a thin film called the solid electrolyte interphase (SEI). The SEI film is a thin film formed by the reaction between the solvent decomposition products in the electrolyte solution and the electrode material, and it plays a crucial role in the transport of the lithium ions and the stability of the battery.

However, since the pulverization of the silicon negative electrode is a recurring process, each charge-discharge cycle leads to the formation of new silicon grains and subsequent pulverization thereof. These new silicon microparticles will continuously react with the components in the electrolyte solution, resulting in continuous generation and reconstruction of the SEI film. Such continuous generation and reconstruction of the SEI film may result in a reduction of the cycle life of the battery.

Currently, modification is continuously performed on silicon-based materials. Studies have shown that nanonization of silicon particles may reduce the volume effect, mitigate the problem of repeated formation of the SEI film caused by the pulverization of silicon grains during the charge-discharge process, improve the cycling performance of the silicon-based negative electrode material, and maintain a high reversible capacity. By further preparing a silicon-carbon composite material and constructing a cage-like structure, the volume effect of the silicon-based negative electrode may be effectively mitigated. However, since the nano silicon particles are relatively high in preparation cost and poor in dispersity, the nano silicon particles are prone to agglomeration during the composite preparation of the silicon-carbon negative electrode, resulting in non-uniform distribution, which affects the cycling performance of the composite material. Therefore, it is difficult to give full play to the advantages of nanonization.

### BRIEF SUMMARY OF THE INVENTION

Embodiments of the present invention provide a silicon-carbon composite material containing carbon nanotubes, and a preparation method therefor and a use thereof, which solve the problems that the nano silicon particles are prone to agglomeration during composite preparation of the silicon-carbon negative electrode due to poor dispersity of the nano silicon particles, resulting in non-uniform distribution, thereby affecting the cycling performance of the composite material, and that it is difficult to give full play to the advantages of nanonization.

In a first aspect, the present invention provides a silicon-carbon composite material containing carbon nanotubes, where the silicon-carbon composite material includes a porous composite hard carbon material containing carbon nanotubes, and silicon nanoparticles;wherein an interior of the porous composite hard carbon material is supported by the carbon nanotubes;
the silicon-carbon composite material uses the porous composite hard carbon material as a substrate, and the silicon nanoparticles are distributed in pores of the porous composite hard carbon material;
a particle size of the silicon-carbon composite material is 1-100 µm; and
a pore size of the pores of the porous composite hard carbon material is 1-7 nm.

Preferably, the silicon nanoparticles account for 10-70% by mass of the silicon-carbon composite material.

Preferably, a diameter of the carbon nanotubes is ≤ 1 µm, and a length thereof is ≤ 50 µm.

In a second aspect, the present invention provides a preparation method for the silicon-carbon composite material containing carbon nanotubes in the first aspect. The preparation method includes:
uniformly mixing resins, carbon nanotubes and nano water-soluble salt particles for heating and curing treatment to obtain a carbonization precursor containing carbon nanotubes;
placing the carbonization precursor containing the carbon nanotubes in a reaction device for carbonization treatment, following by crushing, and then proceed to water washing, filtering, and drying the carbonization precursor to obtain a composite hard carbon substrate containing carbon nanotubes, with a particle size ranging from 1µm to 100µm;
performing pore-forming treatment on the composite hard carbon substrate containing the carbon nanotubes to obtain a porous composite hard carbon material containing carbon nanotubes; and
using the porous composite hard carbon material containing carbon nanotubes as a substrate and a silicon-containing gas as a silicon source, introducing the silicon-containing gas into a reaction furnace via a protective gas for chemical vapor deposition to obtain the silicon-carbon composite material containing carbon nanotubes.

Preferably, a mass ratio of the resins, the carbon nanotubes and the nano water-soluble salt particles is [50%-95%]: [3%-10%]: [2%-40%].

Preferably, the heating and curing treatment is performed at a temperature of 100-300°C for 1-5 hours;
the carbonization treatment is performed at a temperature of 600-900°C for 0.5-15 hours;
the pore-forming treatment is performed at a temperature of 800-1,200°C for 6-50 hours; and
the chemical vapor deposition is performed at a temperature of 500-1,500°C for 1-20 hours.

Preferably, the protective gas includes one or more of nitrogen or argon, with a flow rate of 1-5 L/min.

Preferably, the silicon-containing gas includes one or more of silane, propylsilane, dichlorosilane, trichlorosilane and tetrachlorosilane, with a flow rate of 2-10 L/min.

In a third aspect, the present invention provides a negative electrode sheet, where the negative electrode sheet includes the silicon-carbon composite material in the first aspect.

In a fourth aspect, the present invention provides a lithium battery, where the lithium battery includes the negative electrode sheet in the third aspect.

Compared with the prior art, the nano silicon particles in the silicon-carbon composite material containing carbon nanotubes are uniformly distributed in the pore structures of the porous composite hard carbon material containing carbon nanotubes by chemical vapor deposition. On the one hand, the porous composite hard carbon material containing carbon nanotubes may limit the size of the silicon grains formed by decomposing and depositing the silicon-containing gas and maintain the silicon grains at the nanoscale, and the silicon grains are uniformly dispersed in the porous composite hard carbon material containing carbon nanotubes to reduce the expansion effect, so as to avoid the problem of repeated formation of the SEI film caused by the pulverization of the silicon grains during the charge-discharge process; and on the other hand, the porous composite hard carbon material containing carbon nanotubes may limit expansion of silicon to reduce the damage to the silicon-carbon composite material caused by silicon expansion, thereby improving the cycling performance of the battery. At the same time, the porous composite hard carbon material may effectively increase the compaction density of the coated electrode sheet, such that the energy density of the battery is increased. The hole wall of the porous composite hard carbon material has good compressive strength. The addition of the carbon nanotubes, on the one hand, can improve the tensile strength of the hole wall structure to prevent stress-induced damage in the expansion process of the silicon grains, and on the other hand, enables the electrical conductivity (> 100 S/m) of the carbon nanotubes to be much higher than that (< 10 S/m) of the porous composite hard carbon material, such that the rate performance of the material can be improved.

### BRIEF DESCRIPTION OF THE SEVERAL VIEWS OF THE DRAWINGS

The technical solutions of the embodiments of the present invention will be further described in detail below in conjunction with drawings and embodiments e.
FIG. 1 is a schematic structural diagram of a silicon-carbon composite material containing carbon nanotubes according to an embodiment eof the present invention.
FIG. 2 is a flowchart of a preparation method for a silicon-carbon composite material containing carbon nanotubes according to an embodimentof the present invention.

### DETAILED DESCRIPTION OF THE INVENTION

The present invention will be further described below with reference to the drawings and specific embodiments; however, it shall be understood that these embodimentsare only for the purpose of a more detailed description and shall not be construed as limiting the present invention in any form, i.e., they are not intended to limit the protection scope of the present invention.

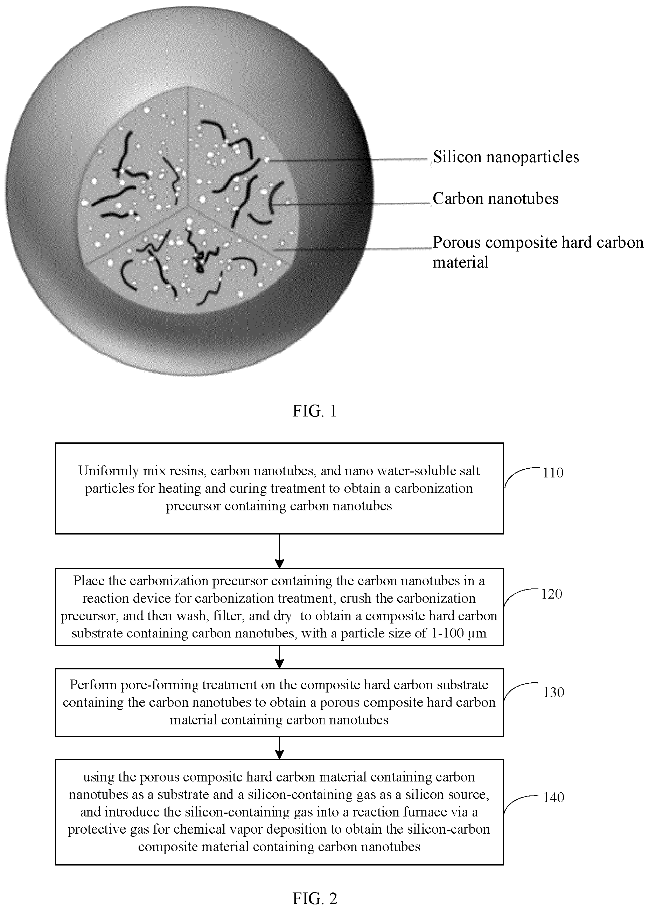

The present invention provides a silicon-carbon composite material containing carbon nanotubes. As shown in FIG. 1, the silicon-carbon composite material includes a porous composite hard carbon material containing carbon nanotubes, and silicon nanoparticles; an interior of the porous composite hard carbon material is supported by the carbon nanotubes;
the silicon-carbon composite material uses the porous composite hard carbon material as a substrate, and silicon nanoparticles are distributed in pores of the porous composite hard carbon material;
a particle size of the silicon-carbon composite material is 1-100 µm; and
a pore size of the pores of the porous composite hard carbon material is 1-7 nm.

The silicon nanoparticles account for 10-70% by mass of the silicon-carbon composite material.

A diameter of the carbon nanotubes is ≤ 1 µm, and a length thereof is ≤ 50 µm.

The present invention further provides a preparation method for the silicon-carbon composite material containing carbon nanotubes. The preparation method is a water-soluble salt templating method. In the preparation process, by taking nano water-soluble salt particles as a template, as shown in FIG. 2, the preparation method includes the following steps:
Step 110, uniformly mixing resins, carbon nanotubes and nano water-soluble salt particles for heating and curing treatment to obtain a carbonization precursor containing carbon nanotubes.

The resins include one or more of phenolic resin, epoxy resin and furfural resin; a diameter of the carbon nanotubes is ≤1 µm, and a length thereof is ≤50 µm; and a particle size of the nano water-soluble salt particles is 20-100 nm.

A mass ratio of the resins, the carbon nanotubes and the nano water-soluble salt particles is [50%-95%]: [3%-10%]: [2%-40%].

The heating and curing treatment is performed at a temperature of 100-300°C for 1 hour to 5 hours.

Step 120, placing the carbonization precursor containing the carbon nanotubes in a reaction device for carbonization treatment, followed by crushing. Then, proceed with water washing, filtering, and drying to obtain a composite hard carbon matrix containing carbon nanotubes with a particle size ranging from 1 µm to 100 µm.

The carbonization treatment is performed at a temperature of 600-900°C for 0.5 to 15 hours.

In this step, washing is performed to remove the nano water-soluble salt particles.

Step 130, performing pore-forming treatment on the composite hard carbon substrate containing the carbon nanotubes to obtain a porous composite hard carbon material containing carbon nanotubes.

Pore-forming treatment is performed on the composite hard carbon substrate containing carbon nanotubes obtained in Step 120 at a temperature of 800-1,200°C for 6-50 hours using a gas source including one or two of oxygen, carbon dioxide and water vapor.

Step 140, by using the porous composite hard carbon material containing carbon nanotubes as a substrate and a silicon-containing gas as a silicon source, introducing the silicon-containing gas into a reaction furnace via a protective gas for vapor deposition to obtain the silicon-carbon composite material containing carbon nanotubes.

The silicon-containing gas includes one or more of silane, propylsilane, dichlorosilane, trichlorosilane and tetrachlorosilane, with a flow rate of 2-10 L/min; the protective gas includes one or both of nitrogen or argon, with a flow rate of 1-5 L/min; and the chemical vapor deposition is performed at a temperature of 500-1,500°C for 1-20 hours.

Compared with the prior art, the nano silicon particles in the silicon-carbon composite material containing carbon nanotubes are uniformly distributed in the pore structures of the porous composite hard carbon material containing carbon nanotubes by chemical vapor deposition. On the one hand, the porous composite hard carbon material containing carbon nanotubes may limit the size of the silicon grains formed by decomposing and depositing the silicon-containing gas and maintain the silicon grains at the nanoscale, and the silicon grains are uniformly dispersed in the porous composite hard carbon material containing carbon nanotubes to reduce the expansion effect, so as to avoid the problem of repeated formation of the SEI film caused by the pulverization of the silicon grains during the charge-discharge process; and on the other hand, the porous composite hard carbon material containing carbon nanotubes may limit expansion of silicon to reduce the damage to the silicon-carbon composite material caused by silicon expansion, thereby improving the cycling performance of the battery. At the same time, the porous composite hard carbon material may effectively increase the compaction density of the coated electrode sheet, such that the energy density of the battery is increased. The hole wall of the porous composite hard carbon material has good compressive strength. The addition of the carbon nanotubes, on the one hand, can improve the tensile strength of the hole wall structure to prevent stress-induced damage in the expansion process of the silicon grains, and on the other hand, enables the electrical conductivity ( >100 S/m) of the carbon nanotubes to be much higher than that ( < 10 S/m) of the porous composite hard carbon material, such that the rate performance of the material can be improved.

The silicon-carbon composite material containing carbon nanotubes provided by the present invention may be used in a negative electrode sheet to be further used in liquid, semi-solid, quasi-solid and all-solid-state electrolyte lithium-ion batteries.

In order to better understand the technical solutions provided by the present invention, a specific process of preparing the silicon-carbon composite material containing carbon nanotubes by applying the method provided in the above embodimentof the present invention, and characteristics of the prepared silicon-carbon composite material containing carbon nanotubes are respectively described below with a plurality of specific embodimenst.

### Embodiment 1

Step 1, resins, carbon nanotubes and nano water-soluble salt particles were uniformly mixed at a ratio of 50%: 10%: 40% to obtain a mixture, and the mixture was heated at 100°C for 5 hours for curing treatment to obtain a carbonization precursor containing carbon nanotubes;
Step 2, the carbonization precursor containing carbon nanotubes was placed in a reaction device, heated to 600°C, and insulated for 15 hours, carbonization treatment was performed on the carbonization precursor containing carbon nanotubes, crushing was followed. Then,it was proceeded with water washing, filtering, and drying to obtain a 12 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was oxygen, with a gas flow of 10 L/min; and the pore-forming treatment was performed at a temperature of 900°C for 6 hours; and
Step 4, the porous composite hard carbon material containing carbon nanotubes was used as a substrate , and a dichlorosilane gas as a silicon source with a flow rate of 2 L/min was introduced into a reaction furnace via nitrogen as a protective gas, with a flow rate of 2 L/min, where chemical vapor deposition was performed at a temperature of 500°C for 2 hours.
   the obtained silicon-carbon composite material containing carbon nanotubes were used as a negative electrode material, the negative electrode material, a conductive additive carbon black, and a binder (sodium carboxymethyl cellulose and styrene-butadiene rubber at a ratio of 1: 1) were weighed at a mass ratio of 96%: 2%: 2%, and a slurry was prepared at room temperature with a beater. The prepared slurry was uniformly applied onto a copper foil, the copper foil was placed in a blower drying oven and dried at 80°C for 2 hours, cut into a round electrode sheet with a diameter of 16 mm, and vacuumized and dried in a vacuum drying oven at 90°C for 5 hours. The dried electrode sheet was immediately transferred into a glove box for later use in assembling a battery.

Simulation of battery assembly was performed in the glove box containing a high-purity Ar atmosphere. a metal lithium was used as a counter electrode and a solution of ethylene carbonate (EC)/diethyl carbonate (DEC) containing 1 mol/L LiPF₆ was used as an electrolyte solution, then the battery was assembled. a constant current charge-discharge mode was tested by using a charge-discharge tester , with a discharge cut-off voltage of 0.005 V and a charge cut-off voltage of 1.5 V, and a charge-discharge test was conducted at a current density of C/10. Test results are recorded in Table 1.

### Comparative Example 1

Step 1, resins and nano silicon particles were uniformly mixed at a ratio of 70%:30%, heated at 100°C for 5 hours for curing treatment to obtain a silicon-carbon material precursor; and
Step 2, the silicon-carbon materialprecursor was placed in a reaction device, heated up to 900°C, and maintained the temperature for 6 hours; and carbonization treatment was performed on the silicon-carbon material precursor;then the resulted material was crushed to obtain a 12 µm silicon-carbon composite material.

### Comparative Example 2

Step 1, resins and nano water-soluble salt particles were uniformly mixed at a ratio of 50%: 50% ,heated at 100°C for 5 hours for curing treatment to obtain a carbonization precursor;
Step 2, the carbonization precursor was placed in a reaction device, heated up to 900°C, and maintained the temperature for 6 hours, carbonization treatment was performed on the carbonization precursor, and it was followed by crushing, and then washing, filtering, and drying to obtain a 12 µm composite hard carbon substrate;
Step 3, pore-forming treatment was performed on the composite hard carbon substrate to obtain a porous composite hard carbon material, where a gas source used was oxygen, with a gas flow of 10 L/min; and the pore-forming treatment was performed at a temperature of 800°C for 8 hours; and
Step 4, the porous composite hard carbon material was used as a substrate, and a dichlorosilane gas used as a silicon source with a flow rate of 2 L/min, was introduced into a reaction furnace via nitrogen gas as a protective gas, with a flow rate of 2 L/min, where chemical vapor deposition was performed at a temperature of 500°C for 2 hours.

### Embodiment 2

Step 1, resins, carbon nanotubes and nano water-soluble salt particles were uniformly mixed at a ratio of 50%: 9%: 41%,heated at 120°C for 5 hours for curing treatment to obtain a carbonization precursor containing carbon nanotubes;
Step 2, the carbonization precursor containing carbon nanotubes was placed in a reaction device, heated up to 900°C, and maintained the temperature for 0.5 hours, carbonization treatment was performed on the carbonization precursor containing carbon nanotubes, crushing was followed. Then,it was proceeded with water washing, filtering, and drying to obtain a 16 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was water vapor, with a gas flow of 0.5 L/min; and the pore-forming treatment was performed at a temperature of 1,200°C for 6 hours; and
Step 4, the porous composite hard carbon material containing carbon nanotubes was used as a substrate, and a silane gas usedas a silicon source with a flow rate of 0.5 L/min, was introduced into a reaction furnacevia nitrogen as a protective gas, with a flow rate of 1 L/min, where chemical vapor deposition was performed at a temperature of 1,500°C for 1 hour.

### Embodiment 3

Step 1, resins, carbon nanotubes and nano water-soluble salt particles were uniformly mixed at a ratio of 50%: 7%: 33% heated at 100°C for 5 hours for curing treatment to obtain a carbonization precursor containing carbon nanotubes;
Step 2, the carbonization precursor containing carbon nanotubes was placed in a reaction device, heated up to 600°C, and maintained the temperature for 15 hours, carbonization treatment was performed on the carbonization precursor containing carbon nanotubes, and the resulted material was crushed. Then, it was proceeded with water washing, filtering, and drying to obtain an 85 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was carbon dioxide, with a gas flow of 20 L/min; and the pore-forming treatment was performed at a temperature of 950°C for 48 hours; and
Step 4, the porous composite hard carbon material containing carbon nanotubes was used as a substrate and a silane and trichlorosilane gas used as a silicon sourcewith a flow rate of 5 L/min was introduced into a reaction furnace via nitrogen as a protective gas with a flow rate of 3 L/min, where chemical vapor deposition was performed at a temperature of 500°C for 18 hours.

### Embodiment 4

Step 1, resins, carbon nanotubes and nano water-soluble salt particles were uniformly mixed at a ratio of 60%: 10%: 30% to obtain a mixture,heated at 100°C for 5 hours for curing treatment to obtain a carbonization precursor containing carbon nanotubes;
Step 2, the carbonization precursor containing carbon nanotubes was placed in a reaction device, heated to 700°C, and maintained the temperature for 15 hours, carbonization treatment was performed on the carbonization precursor containing carbon nanotubes, and the resulted material was crushed, Then, it was proceeded with water washing, filtering, and drying to obtain a 1 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was carbon dioxide, with a gas flow of 9 L/min; and the pore-forming treatment was performed at a temperature of 880°C for 22 hours; and
Step 4, the porous composite hard carbon material containing carbon nanotubes was used as a substrate and a propylsilane and dichlorosilane gas used as a silicon sourcewith a flow rate of 10 L/minwas introduced into a reaction furnace via nitrogen as a protective gas, with a flow rate of 4.5 L/min, where chemical vapor deposition was performed at a temperature of 1,350°C for 10 hours.

### Embodiment 5

Step 1, epoxy resin, carbon nanotubes and nano water-soluble salt particles were uniformly mixed at a ratio of 70%: 5%: 25%, heated at 300°C for 1 hour for curing treatment to obtain a carbonization precursor containing carbon nanotubes;
Step 2, the carbonization precursor containing carbon nanotubes was placed in a reaction device, heated to 1,250°C, and maintained the temperaturefor 10 hours, carbonization treatment was performed on the carbonization precursor containing carbon nanotubes, and the resulted material was crushed, Then, it was proceeded with water washing, filtering, and drying to obtain a 38 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was water vapor, with a gas flow of 7.5 L/min; and the pore-forming treatment was performed at a temperature of 1,050°C for 29 hours; and
Step 4, the porous composite hard carbon material containing carbon nanotubes was used as a substrate and a propylsilane gas used as a silicon source, with a flow rate of 3.5 L/min was introduced into a reaction furnace via nitrogen as a protective gas, with a flow rate of 4.5 L/min, where chemical vapor deposition was performed at a temperature of 1,450°C for 12 hours.

### Embodiment 6

Step 1, epoxy resin, carbon nanotubes and nano water-soluble salt particles were uniformly mixed at a ratio of 95%: 3%: 2% heated at 100°C for 5 hours for curing treatment to obtain a carbonization precursor containing carbon nanotubes;
Step 2, the carbonization precursor containing carbon nanotubes was placed in a reaction device, heated to 850°C, and maintained the temperaturefor 15 hours, carbonization treatment was performed on the carbonization precursor containing carbon nanotubes, and the resulted material was crushed, Then, it was proceeded with water washing, filtering, and drying to obtain a 72 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was carbon dioxide, with a gas flow of 12 L/min; and the pore-forming treatment was performed at a temperature of 1,350°C for 7 hours; and
Step 4, the porous composite hard carbon material containing carbon nanotubes was used as a substrate and a tetrachlorosilane gas used as a silicon source with a flow rate of 3.5 L/minwas introduced into a reaction furnace via nitrogen as a protective gas, with a flow rate of 2 L/min, where chemical vapor deposition was performed at a temperature of 600°C for 20 hours.

### Embodiment 7

Step 1, epoxy resin, carbon nanotubes and nano water-soluble salt particles were uniformly mixed at a ratio of 75%: 10%: 15% , heated at 100°C for 5 hours for curing treatment to obtain a carbonization precursor containing carbon nanotubes;
Step 2, the carbonization precursor containing carbon nanotubes was placed in a reaction device, heated to 900°C, and maintained the temperaturefor 8 hours, carbonization treatment was performed on the carbonization precursor containing carbon nanotubes, and the resulted material was crushed, Then, it was proceeded with water washing, filtering, and drying to obtain a 15 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was carbon dioxide, with a gas flow of 9 L/min; and the pore-forming treatment was performed at a temperature of 800°C for 25 hours; and
Step 4, the porous composite hard carbon material containing carbon nanotubes was used as a substrate, and a silane gas used as a silicon source with a flow rate of 1.5 L/minwas introduced into a reaction furnace via nitrogen as a protective gas, with a flow rate of 1 L/min, where chemical vapor deposition was performed at a temperature of 800°C for 10 hours.

### Embodiment 8

Step 1, epoxy resin, carbon nanotubes and nano water-soluble salt particles were uniformly mixed at a ratio of 70%: 5%: 25% , heated at 150°C for 5 hours for curing treatment to obtain a carbonization precursor containing carbon nanotubes;
Step 2, the carbonization precursor containing carbon nanotubes was placed in a reaction device, heated to 750°C, and maintained the temperaturefor 3 hours, carbonization treatment was performed on the carbonization precursor containing carbon nanotubes, and the resulted material was crushed, Then, it was proceeded with water washing, filtering, and drying to obtain a 44 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was oxygen, with a gas flow of 3 L/min; and the pore-forming treatment was performed at a temperature of 850°C for 15 hours; and
Step 4, the porous composite hard carbon material containing carbon nanotubes was used as a substrate, and a silane gas used as a silicon source with a flow rate of 8 L/minwas introduced into a reaction furnace via argon as a protective gas, with a flow rate of 5 L/min, where chemical vapor deposition was performed at a temperature of 800°C for 10 hours.

### Embodiment 9

Step 1, furfural resin, carbon nanotubes and nano water-soluble salt particles were uniformly mixed at a ratio of 90%: 5%: 5% to obtain a mixture, and the mixture was heated at 200°C for 5 hours for curing treatment to obtain a carbonization precursor containing carbon nanotubes;
Step 2, the carbonization precursor containing carbon nanotubes was placed in a reaction device, heated to 900°C, and maintained the temperaturefor 2 hours, carbonization treatment was performed on the carbonization precursor containing carbon nanotubes, and the resulted material was crushed, Then, it was proceeded with water washing, filtering, and drying to obtain a 56 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was water vapor, with a gas flow of 13 L/min; and the pore-forming treatment was performed at a temperature of 1,050°C for 27 hours; and
Step 4, the porous composite hard carbon material containing carbon nanotubes was used as a substrate, and a propylsilane gas used as a silicon source, with a flow rate of 5 L/min; was introduced into a reaction furnace via argon as a protective gas , with a flow rate of 2.5 L/min, where chemical vapor deposition was performed at a temperature of 1,200°C for 4 hours.

### Embodiment 10

Step 1, furfural resin, carbon nanotubes and nano water-soluble salt particles were uniformly mixed at a ratio of 60%: 5%: 35% heated at 100°C for 5 hours for curing treatment to obtain a carbonization precursor containing carbon nanotubes;
Step 2, the carbonization precursor containing carbon nanotubes was placed in a reaction device, heated to 750°C, and maintained the temperaturefor 8 hours, carbonization treatment was performed on the composite carbonization precursor containing carbon nanotubes, and the resulted material was crushed, Then, it was proceeded with water washing, filtering, and drying to obtain a 12 µm composite hard carbon substrate containing carbon nanotubes;
Step 3, pore-forming treatment was performed on the composite hard carbon substrate containing carbon nanotubes to obtain a porous composite hard carbon material containing carbon nanotubes, where a gas source used was oxygen, with a gas flow of 3 L/min; and the pore-forming treatment was performed at a temperature of 1,150°C for 18 hours; and
Step 4, the porous composite hard carbon material containing carbon nanotubes was used as a substrate, and a propylsilane and dichlorosilane gas used as a silicon source with a flow rate of 6 L/min was introduced into a reaction furnace via argon as a protective gas, with a flow rate of 2.5 L/min, where chemical vapor deposition was performed at a temperature of 1,350°C for 2.5 hours.

Under the same conditions, button batteries were assembled from the materials obtained in Comparative Examples 1-2 and Embodiments 2-10 according to the method in embodiment 1. The electrochemical performance of the button batteries was evaluated through tests, and test results were recorded in Table 1.

**Table 1**

| Serial number | Charge specific capacity (mAh/g) | Initial-cycle efficiency (%) | Capacity retention rate in rate test (%) | | | | | Electrode sheet expansion at full charge (%) |
|---|---|---|---|---|---|---|---|---|
| | | | 1C | 2C | 3C | 4C | 5C | |
| Example 1 | 2567.8 | 90.9 | 97.02 | 96.11 | 95.11 | 92.44 | 89.66 | 8.35 |
| Example 2 | 2745.7 | 92.7 | 95.73 | 93.70 | 92.38 | 90.39 | 87.75 | 9.36 |
| Example 3 | 2573.2 | 91.5 | 97.46 | 95.53 | 94.11 | 92.25 | 89.51 | 8.54 |
| Example 4 | 2595.8 | 93.6 | 98.02 | 96.06 | 95.40 | 93.51 | 90.73 | 8.61 |
| Example 5 | 2614.1 | 94.1 | 98.19 | 96.14 | 94.72 | 92.84 | 90.08 | 8.77 |
| Example 6 | 2535.3 | 91.2 | 96.34 | 94.30 | 92.97 | 90.09 | 88.33 | 9.37 |
| Example 7 | 2624.5 | 90.3 | 98.58 | 97.61 | 96.15 | 94.25 | 91.45 | 9.12 |
| Example 8 | 2613.3 | 93.3 | 95.91 | 93.98 | 92.55 | 90.68 | 87.94 | 9.27 |
| Example 9 | 2722.8 | 92.6 | 97.14 | 96.16 | 94.61 | 92.79 | 89.98 | 9.64 |
| Example 10 | 2656.1 | 93.0 | 94.99 | 93.20 | 92.12 | 89.91 | 87.34 | 8.91 |
| Comparative Example 1 | 2897.2 | 93.4 | 76.31 | 63.37 | 55.12 | 49.93 | 42.10 | 46.25 |
| Comparative Example 2 | 2543.5 | 90.7 | 93.62 | 91.32 | 85.52 | 81.46 | 72.93 | 15.93 |

It may be seen from data in Table 1 that on the premise that there is little difference in charge specific capacity and initial-cycle efficiency between Examples 1-10 and Comparative Examples 1-2, the rate performance in Examples 1-10 is obviously superior to that in Comparative Examples 1-2, and the electrode expansion at full charge is obviously lower than that in Comparative Examples 1-2. In Comparative Example 1, a common silicon-carbon structure is formed by mixing and sintering nano silicon and a carbon substrate. The nanoparticles are unevenly dispersed and exhibit a significant expansion effect. The expansion rate of the electrode sheet at full charge is 46.25%. In Comparative Example 2, a deposited silicon-carbon composite material is shown. In comparison, the addition of the carbon nanotubes in the silicon-carbon composite material provided in Example 1 can not only inhibit the stress-induced damage in the expansion process of the silicon particles, decrease the expansion rate of the fully charged electrode sheet from 15.93% to 8.35% to further improve the structural stability of the particles during charge-discharge process, and solve the problem of repeated generation of the SEI film caused by silicon grain pulverization during the charge-discharge process, so as to improve the cycling performance of the battery, but also effectively improve the electrical conductivity of the material, thereby improving the rate performance of the material.

Compared with the prior art, according to the silicon-carbon composite material containing carbon nanotubes provided by the present invention, the nano silicon particles are uniformly distributed in the pore structures of the porous composite hard carbon material containing carbon nanotubes by chemical vapor deposition. On one hand, the porous composite hard carbon material containing carbon nanotubes may limit the size of the silicon grains formed by decomposing and depositing the silicon-containing gas and maintain the silicon grains at the nanoscale, and the silicon grains are uniformly dispersed in the porous composite hard carbon material containing carbon nanotubes to reduce the expansion effect, so as to avoid the problem of repeated formation of the SEI film caused by the pulverization of the silicon grains during the charge-discharge process; and on the other hand, the porous composite hard carbon material containing carbon nanotubes may limit expansion of silicon to reduce the damage to the silicon-carbon composite material caused by silicon expansion, thereby improving the cycling performance of the battery. At the same time, the porous composite hard carbon material may effectively increase the compaction density of the coated electrode sheet, such that the energy density of the battery is increased. The hole wall of the porous composite hard carbon material has good compressive strength. The addition of the carbon nanotubes, on the one hand, can improve the tensile strength of the hole wall structure to prevent stress-induced damage in the expansion process of the silicon grains, and on the other hand, enables the electrical conductivity (> 100 S/m) of the carbon nanotubes to be much higher than that (<10 S/m) of the porous composite hard carbon material, such that the rate performance of the material can be improved.

The above specific implementations further describe the objectives, technical solutions, and beneficial effects of the present invention in detail. It shall be understood that the above descriptions are merely specific embodiments of the present invention and are not intended to limit the protection scope of the present invention. Any modification, equivalent replacement, improvement, or the like made within the spirit and principles of the present invention shall be included in the protection scope of the present invention.

## Claims

1. A silicon-carbon composite material containing carbon nanotubes, comprising a porous composite hard carbon material containing carbon nanotubes, and silicon nanoparticles, wherein an interior of the porous composite hard carbon material is supported by the carbon nanotubes;
the silicon-carbon composite material uses the porous composite hard carbon material as a substrate, and the silicon nanoparticles are distributed in pores of the porous composite hard carbon material;
a particle size of the silicon-carbon composite material is 1-100 µm; and
a pore size of the pores of the porous composite hard carbon material is 1-7 nm.

2. The silicon-carbon composite material according to claim 1, wherein the silicon nanoparticles account for 10-70% by mass of the silicon-carbon composite material.

3. The silicon-carbon composite material according to claim 1, wherein a diameter of the carbon nanotubes is ≤ 1 µm, and a length thereof is ≤ 50 µm.

4. A preparation method for the silicon-carbon composite material containing carbon nanotubes according to any one of claims 1 to 3, comprising:
uniformly mixing resins, carbon nanotubes and nano water-soluble salt particles for heating and curing treatment to obtain a carbonization precursor containing carbon nanotubes;
placing the carbonization precursor containing the carbon nanotubes in a reaction device for carbonization treatment, followed by crushing and then washing, filtering, and drying to obtain a composite hard carbon substrate containing carbon nanotubes, with a particle size of 1-100 µm;
performing pore-forming treatment on the composite hard carbon substrate containing the carbon nanotubes to obtain a porous composite hard carbon material containing carbon nanotubes; and
using the porous composite hard carbon material containing carbon nanotubes as a substrate, and a silicon-containing gas as a silicon source introducing the silicon-containing gas into a reaction furnace via a protective gas for chemical vapor deposition to obtain the silicon-carbon composite material containing carbon nanotubes.

5. The preparation method according to claim 4, wherein a mass ratio of the resins, the carbon nanotubes and the nano water-soluble salt particles is [50%-95%]: [3%-10%]: [2%-40%].

6. The preparation method according to claim 4, wherein the heating and curing treatment is performed at a temperature of 100-300°C for 1-5 hours;
the carbonization treatment is performed at a temperature of 600-900°C for 0.5-15 hours;
the pore-forming treatment is performed at a temperature of 800-1,200°C for 6-50 hours; and
the chemical vapor deposition is performed at a temperature of 500-1,500°C for 1-20 hours.

7. The preparation method according to claim 4, wherein the protective gas comprises one or two of nitrogen or argon, with a flow rate of 1-5 L/min.

8. The preparation method according to claim 7, wherein the silicon-containing gas comprises one or more of silane, propylsilane, dichlorosilane, trichlorosilane and tetrachlorosilane, with a flow rate of 2-10 L/min.

9. A negative electrode sheet, comprising the silicon-carbon composite material according to any one of claims 1-3.

10. A lithium battery, comprising the negative electrode sheet according to claim 9.
